# EUROPEAN PATENT APPLICATION

(11) **EP 3 633 964 A1**
(43) Date of publication of application: **08.04.2020**
(21) Application number: 19315020.8
(22) Date of filing: 28.03.2019
(51) Int. Cl.: H04M 3/42, H04M 3/436, H04L 29/06

(54) **METHOD FOR ASSISTING A CALLEE WITH A REPUTATION SCORE OF A CALLER**

(71) Applicant: ALE International, 92700 Colombes (FR)
(72) Inventor: Mourot, Patrick, 67400 Illkirch (FR); Nogueira, Georges, 67300 Schiltigheim (FR); Olivier, Francois, 67115 Plobsheim (FR)
(74) Representative: Therias, Philippe

(57) **Abstract**

A method is devised, in a network of interconnected equipment comprising a first terminal equipment (103) used by a caller (B), a second terminal equipment (102) used by a callee (A), a blockchain smartcontracts (207), a report database (201) and a blockchain distributed ledger (205), of making available to callee (A) a current reputation score about caller (B), comprising the steps of: subscribing the callee (A) to a smartcontract within the blockchain smartcontracts (207), making available to a query by the second terminal equipment (102) in a first ledger in blockchain distributed ledger (205), the current reputation score about the caller (B), upon callee (A) managing the call made by the caller (B) and after the end of the call, making available to a query by the second terminal equipment (102), of the report database (201) for storing a first report (511, 513) about the call, making available to a query by the first terminal equipment (103), of the report database (201) for storing a second report (512) about the call, calculating a new reputation score for caller (B) based the current reputation score and on the first and second reports; and updating the first ledger with the new reputation score as the current reputation score about caller (B).

## Description

### FIELD

The present technology relates to the management of the reputation of users of a network, so as to assist a callee with decisions about taking a call from a caller.

### BACKGROUND

Today, public telephony systems or communication systems connected to public services are exposed to undesirable incoming calls. These undesirable calls have the characteristics that (i) the presented calling number-of-such public telephony systems or communication systems is the only available information for users to decide on pick up, and (ii) that these calls can be with fraudulent intent that such receiving users cannot detect prior to taking the call. Such undesirable calls include, without limitation, phone scams, robot calls, smishing (SMS phishing) attack, tax scams, unwanted phone solicitors, caller identity hidden or fraud, etc. A frequent aspect of the fraudulent intent is to get the users to call back overcharged phone numbers without knowing beforehand the cost of such call.

Various attempts have been made at tackling wholly or in part this growing problem, including:
- technical specifications with a view of providing caller identification and verification services, in addition to standard services, such as the Extensible Authentication Protocol implemented in the works of various standards organizations, such as IEEE with 802.1X ;
- allowing users to register their phone number in a local database, that callers are supposed to refer to and avoid calling the registered numbers. For example, authorities in France took the initiative to develop such a service: https://conso.bloctel.fr/index.php/fonctionnement-du-service.php .

However these attempts have failed to contain the problem which affects users of public telephony systems or communication systems connected to public services worldwide.

### SUMMARY

The proposed technology aims at providing network users with a seamless and efficient capability to recognize and then avoid being disturbed by undesirable incoming calls, and/or avoid calling back fraudulent sources. It brings about the following benefits and advantages:
- it is trustable for the public, as being unfalsifiable, distributed, open, decentralized and traceable, thus inviting to subscribing to the services underlying the technology;
- it is agnostic with communication/telephony system;
- it is iterative and involves a continuously improved decision process about recognizing undesirable incoming calls;
- it provides a protection mechanism that relies on decision making at the receiving end of a call, that cannot be bypassed by spammers;
- the assessment mechanism that produces the reputation score of callers is relevant thanks to behavioral and multi-criteria input parameters.

Various implementations of the present technology provide a method, in a network of interconnected equipment comprising a first terminal equipment used by a caller, a second terminal equipment used by a callee, a blockchain smartcontracts, a report database and a blockchain distributed ledger, of making available to callee a current reputation score about caller, comprising the steps of:
- subscribing the callee to a smartcontract within the blockchain smartcontracts;
- making available to a query by the second terminal equipment in a first ledger in blockchain distributed ledger, the current reputation score about the caller;
- upon callee answering the call made by the caller and after the end of the call:
   - making available to a query by the second terminal equipment, of the report database for storing a first report about the call;
   - making available to a query by the first terminal equipment, of the report database for storing a second report about the call;
   - calculating a new reputation score for caller based the current reputation score and on the first and second reports; and
- updating the first ledger with the new reputation score as the current reputation score about caller.

In one embodiment, the step in the method, of calculating a new reputation score for caller further comprises the steps of:
- applying an increment Y to the current reputation score for caller if:
   - the first and second report are stored in the report database and converging, and the first report does not expressly qualify the call as spam; or
   - the first report only is stored in the report database, the first report does not expressly qualify the call as spam, and the duration of the call is above a time threshold; and
- applying a decrement X to the current reputation score for caller if:
   - the first and second report are stored in the report database and converging, and the first report expressly qualifies the call as spam;
   - the first and second report are stored in the report database and are not converging;
   - the first report only is stored in the report database, and expressly qualifies the call as spam; or
   - the first report only is stored in the report database, does not expressly qualify the call as spam, and the duration of the call is below the time threshold; and
- keeping the current reputation score for caller unchanged if no report is stored in the report database.

In another embodiment, the first and second report are converging if their data differ by less than a predetermined percentage.

In yet another embodiment, the values of X and Y are decreased based on the number of calls between caller and callee over a sliding window of predetermined time.

In yet another embodiment, the value of Y is multiplied by a predetermined first factor if the first and second report are stored in the report database and converging, and the first report does not expressly qualify the call as spam.

In yet another embodiment, the value of Y is multiplied by a predetermined second factor if the first report only is stored in the report database, the first report does not expressly qualify the call as spam, and the duration of the call is above a time threshold, and the value of X is multiplied by a predetermined third factor if the first report only is stored in the report database, and expressly qualifies the call as spam.

Various implementations of the present technology also provide a method, in a network of interconnected equipment comprising a first terminal equipment used by a caller, a second terminal equipment used by a callee, a blockchain smartcontracts, a report database and a blockchain distributed ledger, of handling a call made by the caller, comprising the steps of:
- subscribing by the callee of a smartcontract with a reputation provider within the blockchain smartcontracts;
- querying by the second terminal equipment the blockchain distributed ledger according to the smartcontract subscribed by the callee, and collecting a current reputation score about the caller calculated by blockchain smartcontracts based on previous calls placed by caller; and
- upon callee answering the call made by the caller and after the end of the call:
   - storing by the second terminal equipment of a first report about the call in the report database;
   - calculating by the second terminal equipment of a hash value of the first report; and
      - storing by the second terminal equipment of the hash value in the blockchain distributed ledger.

In one embodiment, the method further comprises the steps of:
- upon callee answering the call made by the caller and after the end of the call:
   - storing by the first terminal equipment of a second report about the call in the report database;
   - calculating by the first terminal equipment of a hash value of the second report; and
   - storing by the first terminal equipment of the hash value in the blockchain distributed ledger.

In another embodiment, the method further comprises the steps of:
- subscribing by the caller of a smartcontract with a reputation provider within the blockchain smartcontracts;
- querying by the first terminal equipment the blockchain distributed ledger according to the smartcontract subscribed by the caller, and collecting the current reputation score about the caller; and
- upon callee answering the call made by the caller and after the end of the call:
   - storing by the first terminal equipment of a third report about the call in the report database;
   - calculating by the first terminal equipment of a hash value of the third report; and
   - storing by the first terminal equipment of the hash value in the blockchain distributed ledger.

In yet another embodiment, the method further comprises the steps performed by the blockchain smartcontracts of:
- retrieving of the stored report about the call in the report database, and of the stored hash value of the stored report;
- checking by the blockchain smartcontracts that the retrieved hash value matches the retrieved report;
- calculating a new reputation score for caller based the current reputation score and on the stored report; and
- updating a ledger in blockchain distributed ledger with the new reputation score as the current reputation score about caller.

Various implementations of the present technology provide a computer-implemented system configured to, and a computer-readable medium comprising instructions causing to, perform the methods above.

### BRIEF DESCRIPTION OF THE DRAWINGS

For a better understanding of the present technology, as well as other aspects and further features thereof, reference is made to the following description which is to be used in conjunction with the accompanying drawings, where:
Fig. 1 is an illustration of a physical network in which the invention may be implemented;
Fig.2 is a functional illustration of interaction between elements according to the invention;
Fig.3 is an illustration of interaction between elements in an embodiment of the invention;
Fig.4 is an illustration of interaction between elements in another embodiment of the invention;
Fig.5 provides a detailed view of the building of the blockchain in an embodiment of the invention;
Fig.6 provides a detailed view of a scoring process in an embodiment of the invention;
Fig.7 illustrates an example of a computing device that may be used to implement any of the methods described herein.

It should be noted that, unless otherwise explicitly specified herein, the drawings are not to scale. Finally, elements that are identical from one drawing to the other bear the same numeral reference across drawings.

### DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some embodiments of the present technology, the processor may be a general purpose processor, such as a central processing unit (CPU) or a processor dedicated to a specific purpose, such as a digital signal processor (DSP). In the aforementioned, explicit use of the term a « processor » should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that « module » may include for example, but without being limitative, computer program logic, computer program instructions, software, stack, firmware, hardware circuitry or a combination thereof which provides the required capabilities.

With these fundamentals in place, we will now consider some non-limiting examples to illustrate various implementations of aspects of the present technology.

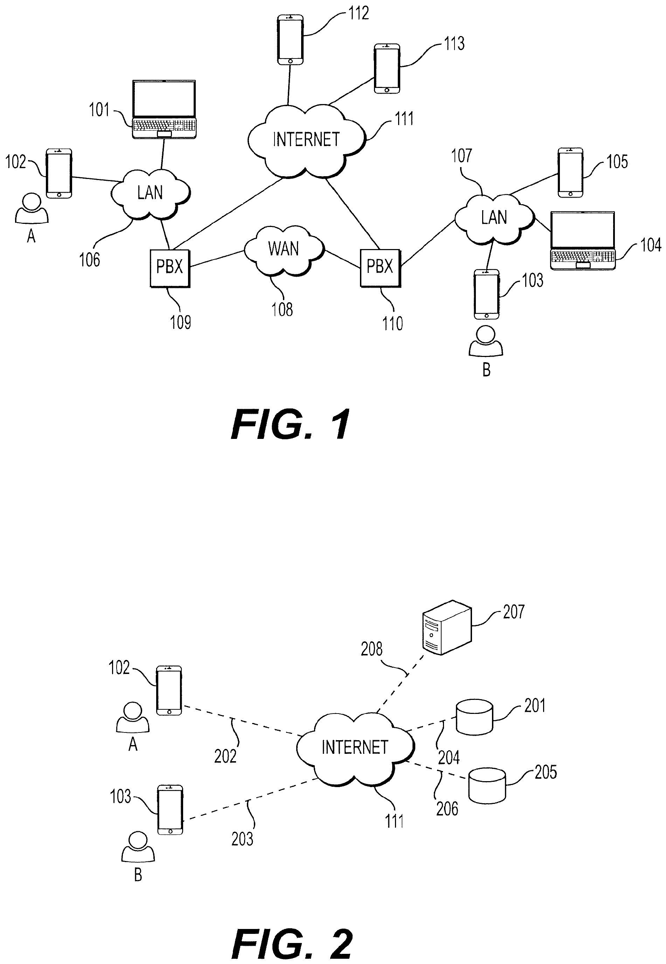

Fig.1 is a an illustration of a physical network in which the invention may be implemented.

A first Local Area Network (LAN) 106 may be interconnecting terminal equipment 101 and 102 and itself be connected to a first Private Branch Exchange (PBX) 109. A second LAN 107 may be interconnecting terminal equipment 103, 104, and 105, and itself be connected to a second PBX 110. First and second PBX 109 and 110 may be interconnected through a Wide Area Network (WAN) 108, and each connected to the internet 111. Fixed or mobile telephony could be interconnecting with internet 111, under the form, for example of terminal equipment 112 and 113.

In the network of Fig.1, a user A, using terminal equipment 102, may be receiving a call from a user B, using terminal equipment 103. While user equipment 102 and 103 are represented as phone devices, the person skilled in the art will appreciate that other or more complex communication systems may be used without affecting the applicability of the invention.

Fig.2 is a functional illustration of interaction between elements according to the invention.

User A using terminal equipment 102 and user B using terminal equipment 103, may be connected to the internet 111 through functionally represented links, respectively 202 and 203. A call report database 201 may be had, connected as well to the internet 111 through functionally represented link 204. A blockchain as a distributed ledger 205 may be had, connected as well to the internet 111 through functionally represented link 206. A blockchain as smartcontract functions 207 may be had, connected as well to the internet 111 through functionally represented link 208. All five elements 102, 103, 201, 205 and 207 may interact and exchange information using various inter-node exchange protocols, as is known to the person skilled in the art. While internet 111 is shown as interconnecting terminal equipment 102 and 103, call report database 201, blockchain as a distributed ledger 205 and blockchain as smartcontract functions 207, the person skilled in the art will appreciate that other types of internetworking may be had without affecting the applicability of the invention.

The report database 201 contains reports about calls between users of given terminal equipment in the network. By definition, such users carry a unique User ID, for example a phone number in a telecommunication network. These reports contain transaction metadata about such calls. Two types of transaction metadata may be had, in the alternate or in conjunction depending on the embodiment of the invention:
- objective metadata corresponding to the characteristics of a transaction, for example: duration of the call, time of the call, location of origin of the call, language used, explicit spammer, etc.;
- subjective metadata corresponding to data entered by one or both of the given users in a transaction.

While report database 201, blockchain distributed ledger 205 and blockchain smartcontracts 207 have been represented as singled-out separate physical entities, this is a functional representation only, and the person skilled in the art will appreciate that other types of physical combination and location may be had without affecting the applicability of the invention. For example, all three of report database 201, blockchain distributed ledger 205 and blockchain smartcontracts 207 may be physically available in a single data processing entity. Blockchain technology typically is a distributed ledger available in multiple physical storage locations, and blockchain distributed ledger 205 and blockchain smartcontracts 207 are each represented for the purpose of description simplification only in the form of single elements on Fig.2.

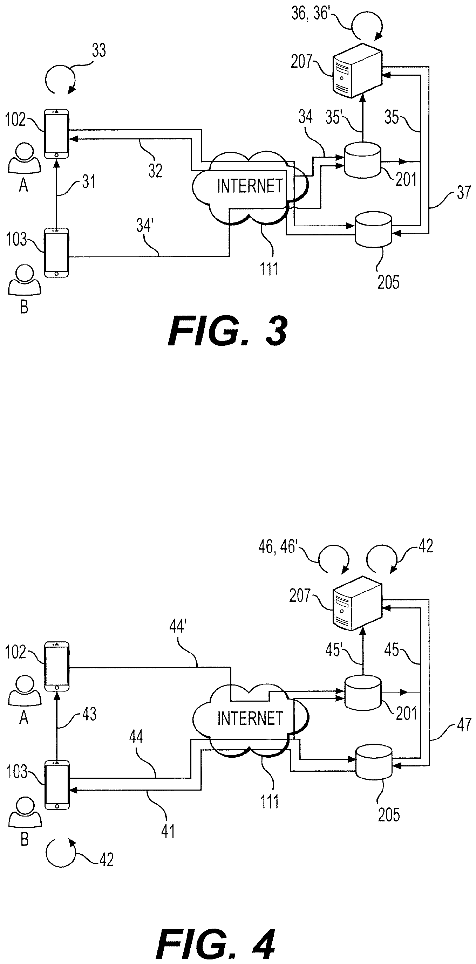

In function, as shown in relation to Fig.3, which is an illustration of interaction between elements in one embodiment of the invention:
- step 31: terminal equipment 103 is used by user B to place a call to terminal equipment 102 used by user A ;
- step 32: user A using terminal equipment 102 queries blockchain distributed ledger 205 according to one of blockchain smartcontracts 207 subscribed by user A with a blockchain provider, to access reputation available about user B's unique User ID;
- step 33: user A decides, based on the reputation associated with user B's unique User ID, how to manage the call from user B using terminal equipment 103;
- step 34: after the call, user A through terminal equipment 102 stores into report database 201 data about the call it had; terminal equipment 102 may also store metadata about the call; a hash value of this report is computed in terminal equipment 102 and sent in blockchain distributed ledger 205.
- step 35: blockchain smartcontracts 207 retrieves such data from report database 201, and retrieves hash values from blockchain distributed ledger 205 to check it matches with the asked report content;
- step 36: blockchain smartcontracts 207 computes a reputation score based on user B history reputation; and
- step 37: blockchain smartcontracts 207 updates in blockchain distributed ledger 205 a ledger associated with reputation score of user B's unique User ID.

In another embodiment of the invention, three additional steps are performed, as shown Fig.3:
- step 34', immediately after step 34: after the call, user B through terminal equipment 103 sends to report database 201 data about the call it had; terminal equipment 103 may also store metadata about the call; a hash value of this report is computed in terminal equipment 103 and sent in blockchain distributed ledger 205;
- step 35', immediately after step 35: blockchain smartcontracts 207 computes a converging report between outcomes of step 34 and 34'; and
- step 36', immediately after step 36: blockchain smartcontracts 207 computes a reputation score based also on said converged call reports.

In another embodiment of the invention, user B may too subscribe to a smartcontract with the blockchain provider. In function, as shown in relation to Fig.4, which is an illustration of interaction between elements in that embodiment of the invention:
- step 41: user B using terminal equipment 103 queries blockchain distributed ledger 205 according to a smartcontract subscribed by user B with the blockchain provider, to access reports available about user A using terminal equipment 102;
- step 42: user B may decide to place a call to user A based on received reputation score associated with user A's unique User ID;
- step 43: terminal equipment 103 is used by user B to place a call to terminal equipment 102 used by user A;
- step 44: after the call, user B through terminal equipment 103 stores into report database 201 data about the call it had; terminal equipment 103 may also store metadata about the call; a hash value of this report is computed in terminal equipment 103 and sent in blockchain distributed ledger 205;
- step 45: blockchain smartcontracts 207 retrieves such data from report database 201; and retrieves hash values from blockchain distributed ledger 205 to check it matches with the asked report content;
- step 46: blockchain smartcontracts 207 computes a reputation score based on user A history reputation; and
- step 47: blockchain smartcontracts 207 updates in blockchain distributed ledger 205 a ledger associated with reputation score of user A's unique User ID.

In another embodiment of the invention, three additional steps are performed, as shown Fig.4:
- step 44', immediately after step 44: after the call, user A through terminal equipment 102 sends to report database 201 data about the call it had; terminal equipment 102 may also store metadata about the call; a hash value of this report is computed in terminal equipment 102 and sent in blockchain distributed ledger 205;
- step 45', immediately after step 45: blockchain smartcontracts 207 computes the converging report between outcomes of step 44 and 44'; and
- step 46', immediately after step 46: blockchain smartcontracts 207 computes a reputation score based also on said converged call reports.

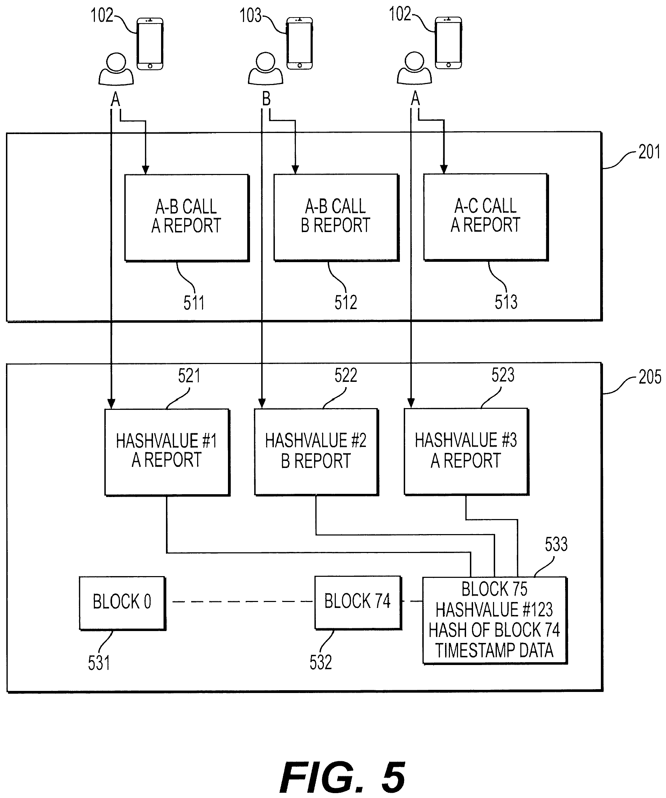

The blockchain distributed ledger 205 stores hash values of reports contained in report database 201. More particularly, Fig.5 provides a detailed view of the building of the blockchain in an embodiment of the invention.

Call reports 511-513 are stored in report database 201. For example:
- report 511 may be issued by user A about a call it had with user B;
- report 512 may be issued by user B about a call it had with user A; and
- report 513 may be issued by user A about a call it had with a user C.

Hash values in relation to such reports may be computed by respective user devices as follows:
- hash values 521-523 may be computed in relation to respectively reports 511-513, by respective devices of user A, B, and A;
- such hash values may be further combined and added to a newly created block 533 of a blockchain distributed ledger 205.

A blockchain with a genesis block 531, and having evolved over time with the addition of blocks 532 and 533, may be stored in blockchain distributed ledger 205. In addition to the combination of hash values as described above, block 533 include a time stamp and a hash value of the preceding block 532 in the blockchain, as is known to the person skilled in the art.

The blockchain smartcontracts 207 may be created for example by providers of reputation services.

Users of the network in turn may subscribe to blockchain smartcontracts providing reputation scores they want to have access to. They do so by registering a unique user ID that is associated with them.

The blockchain smartcontracts 207 perform calculation functions of user reputation scores. These functions use a selection of available call reports' data in report database 201, to produce reputation scores associated to user IDs.

When a blockchain is created with a smartcontract, user IDs may have initial reputation scores associated to them. The initial score may be null, or by reference to a score provided by trusted telecom services providers or other scoring third parties, or a combination thereof.

According to one embodiment of the invention, a scoring process may be performed in relation to a call between user B (caller) and user A.

According to this process, certain rules may be defined:
- user B's reputation score alone may vary;
- a user's reputation score may become positive or negative.

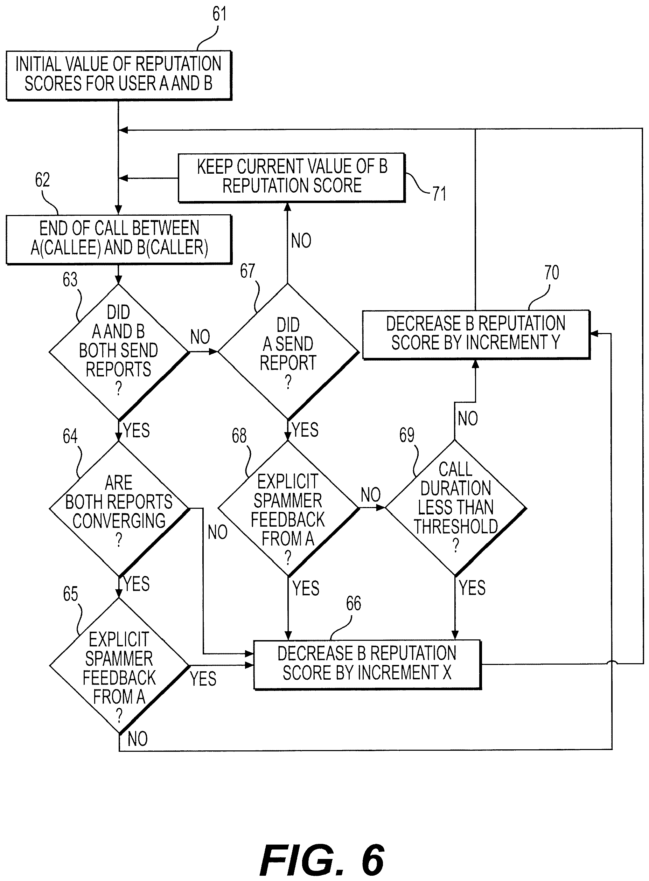

Fig.6 provides a detailed view of a scoring process in an embodiment of the invention.

At step 61, reputation scores are set at an initialvalues, for example to zero, for all user IDs in the network, and users A and B in the particular situation exposed with this description of the scoring process;
At step 62, the call is ended between user B (as caller) and user A (as callee);
At step 63 a check is made whether both users sent a report about the call:
- if they both sent a report, at step 64, a check is made whether both reports are converging:
   - if they are not, at step 66, user B's reputation score is decreased;
   - if they are, at step 65 a check is made whether user A explicitly reported a spammer:
      - if it did, at step 66, user B's reputation score is decreased;
      - if not, at step 70, user B's reputation score is increased;
- if only user A sent a report (step 67), at step 68 a check is made whether user A explicitly reported a spammer:
   - if it did, at step 66, user B's reputation score is decreased;
   - if not, at step 69, a check is made whether the call lasted less than a predetermined threshold;
      - if it did, at step 66, user B's reputation score is decreased;
      - if not, at step 70, user B's reputation score is increased;
- if no user sent a report (step 67), at step 71, user B's reputation score is maintained as is. It will be apparent to the person skilled in the art that Fig.6 depicts the particular embodiment of the invention when both users A and B are given the opportunity to send a report about the call, and that in other embodiments when only user A or B is given such opportunity, steps 63, 64 and 67 may become irrelevant.

Report about the call, if any, sent by either or both users, may include objective metadata corresponding to the characteristics of the transaction, for example: duration of the call, time of the call, location of origin of the call, language used, explicit spammer, etc.;
"Reports converging" may for example mean that both reports are similar enough for example in relation to duration of the call, time of the call, location of origin of the call, language used, etc.

The similarity of reports checked may involve a predetermined % of difference between data under which reports are considered similar. For example 5%.

The decrement in user B's reputation score at step 66 may be of a value X, and the increment at step 70 may be of a value Y.

Y may be equal to X in an embodiment.

In another embodiment, not depicted Fig.6, in order to prevent collusion between users with an objective of influencing a particular reputation score, X and/or Y may become lower for each new call between the two parties over a sliding window of time, for example one week. For example, X and/or Y may be divided by two after each call within that window of time. X and/or Y may be reset to a nominal value (for example: one) after a period of call inactivity between user B and user A, for example one week.

The predetermined period for a short call at step 69 may for example be set at five seconds.

Upon receiving a call from user B, user A, assuming it has subscribed to the associated smartcontract, may have access to user B's reputation score stored in the blockchain distributed ledger 205, and make an informed decision about how to manage a call, picking up the call or not. User A may be given recommendations by providers of smartcontract reputation services to not pick up if user B's reputation score is below a predetermined, for example minus ten.

The reputation score system according to the invention may be completed with moderation and management function managed by providers of smartcontract reputation services such as:
- how to reset a reputation score, for example in relation to value of the reset (zero or some other value), or timing of the reset relative to time passing (for example, reset may be had after a particular user has not made any call for a predetermined period of time, for example one week);
- how to add and/or remove a user ID from the system.

Other balancing rules not depicted in Fig. 6 may also be had for higher accuracy, for example:
- higher weight may be given to converging reporting, for example by factoring Y at step 70 by a predetermined value, for example 1.25, when branch is made from step 65;
- higher weight may be given to the called party's report (user A), for example by factoring Y at step 70 by a predetermined value, for example 1.25, when branch is made from step 69, and/or factoring X at step 66 by a predetermined value, for example 1.25, when branch is made from step 68;
- higher weight may be given to multiple callees reporting on a single caller, for example by factoring X and/or Y by a predetermined value, for example 1.1, for example if the call with user A takes place, as the case may be within a given time period such as ten minutes, after another call placed by user B on which a user C reported;
- higher weight may be given to calls that have a duration longer than a predetermined period, for example two minutes, by factoring X and/or Y by a predetermined value, for example 1.1.

In embodiments of the invention, the reputation score may be more than a numerical reputation value. The score definition and underlying algorithm may be extended to other specific usages: for example, an expertise quality score of both the caller and the callee may be evaluated with a similar approach. Such score may assign individual values of participants in a given field of expertise, location availability, knowledge of languages, prices of products or services, quality, etc... This attribute may be added to the score by the callee and/ or the caller. This attribute may be stored in the blockchain and may be retrievable by participants. Thus, when a participant needs a particular expertise or quality, it may seek a participant having one or multiple satisfying scores in the field of expertise or level or quality. A communication decision (call or pickup calls) may then be made based on the results of the search.

While the invention has been described as involving one smartcontract and one blockchain, it it will be apparent to the person skilled in the art multiple smartcontracts and multiple blockchains may be considered based on the invention and without departing from the scope thereof.

While the invention has been described in relation to using the reputation of a caller when using a particular terminal equipment in a network for the benefit of other users in the network when deciding whether to pick up a call from such caller, it will be apparent to the person skilled in the art that other use cases may be considered based on the invention and without departing from the scope thereof. For example, management of reputation may be used in making decisions for automatic telecommunication services, such as voice mail routing, recording, automatic answering, etc.

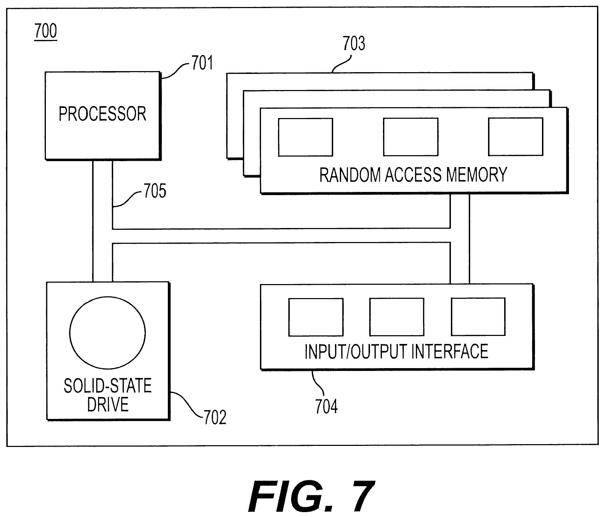

Figure 7 illustrates an example of a computing device that may be used to implement any of the methods described herein. 700 represents a computing environment in accordance with an embodiment of the present technology is shown. In some embodiments, the computing environment 700 may be implemented by any of a conventional personal computer, a computer dedicated to operating and/or monitoring systems relating to a data center, a controller and/or an electronic device (such as, but not limited to, a mobile device, a tablet device, a server, a controller unit, a control device, a monitoring device etc.) and/or any combination thereof appropriate to the relevant task at hand. In some embodiments, the computing environment 700 comprises various hardware components including one or more single or multi-core processors collectively represented by a processor 701, a solid-state drive 702, a random-access memory 703 and an input/output interface 704.

In some embodiments, the computing environment 700 may also be a subsystem of one of the above-listed systems. In some other embodiments, the computing environment 700 may be an "off the shelf' generic computer system. In some embodiments, the computing environment 700 may also be distributed amongst multiple systems. The computing environment 700 may also be specifically dedicated to the implementation of the present technology. As a person in the art of the present technology may appreciate, multiple variations as to how the computing environment 700 is implemented may be envisioned without departing from the scope of the present technology.

Communication between the various components of the computing environment 700 may
be enabled by one or more internal and/or external buses 705 (e.g. a PCI bus, universal serial bus, IEEE 1394 "Firewire" bus, SCSI bus, Serial-ATA bus, ARINC bus, etc.), to which the various hardware components are electronically coupled.

The input/output interface 704 may allow enabling networking capabilities such as wire or wireless access. As an example, the input/output interface 704 may comprise a networking interface such as, but not limited to, a network port, a network socket, a network interface controller and the like. Multiple examples of how the networking interface may be implemented will become apparent to the person skilled in the art of the present technology. For example, but without being limitative, the networking interface may implement specific physical layer and data link layer standard such as Ethernet, Fibre Channel, Wi-Fi or Token Ring. The specific physical layer and the data link layer may provide a base for a full network protocol stack, allowing communication among small groups of computers on the same local area network (LAN) and large-scale network communications through routable protocols, such as Internet Protocol (IP). According to implementations of the present technology, the solid-state drive 702 stores program instructions suitable for being loaded into the random-access memory 703 and executed by the processor 701 for executing operating data centers based on a generated machine learning pipeline. For example, the program instructions may be part of a library or an application.

## Claims

1. A method, in a network of interconnected equipment comprising a first terminal equipment (103) used by a caller (B), a second terminal equipment (102) used by a callee (A), a blockchain smartcontracts (207), a report database (201) and a blockchain distributed ledger (205), of making available to callee (A) a current reputation score about caller (B), comprising the steps of:
- subscribing the callee (A) to a smartcontract within the blockchain smartcontracts (207);
- making available to a query by the second terminal equipment (102) in a first ledger in blockchain distributed ledger (205), the current reputation score about the caller (B);
- upon callee (A) answering the call made by the caller (B) and after the end of the call:
- making available to a query by the second terminal equipment (102), of the report database (201) for storing a first report (511, 513) about the call;
- making available to a query by the first terminal equipment (103), of the report database (201) for storing a second report (512) about the call;
- calculating a new reputation score for caller (B) based the current reputation score and on the first and second reports; and
- updating the first ledger with the new reputation score as the current reputation score about caller (B).

2. The method of claim 1 in which the step of calculating a new reputation score for caller (B) further comprises the steps of:
- applying an increment Y to the current reputation score for caller (B) if:
- the first and second report are stored in the report database (201) and converging, and the first report does not expressly qualify the call as spam; or
- the first report only is stored in the report database (201), the first report does not expressly qualify the call as spam, and the duration of the call is above a time threshold; and
- applying a decrement X to the current reputation score for caller (B) if:
- the first and second report are stored in the report database (201) and converging, and the first report expressly qualifies the call as spam;
- the first and second report are stored in the report database (201) and are not converging;
- the first report only is stored in the report database (201), and expressly qualifies the call as spam; or
- the first report only is stored in the report database (201), does not expressly qualify the call as spam, and the duration of the call is below the time threshold; and
- keeping the current reputation score for caller (B) unchanged if no report is stored in the report database (201).

3. The method of claim 2 wherein the first and second report are converging if their data differ by less than a predetermined percentage.

4. The method of claim 2 or 3 in which the values of X and Y are decreased based on the number of calls between caller (B) and callee (A) over a sliding window of predetermined time.

5. The method of any of the claims 2 to 4 in which the value of Y is multiplied by a predetermined first factor if the first and second report are stored in the report database (201) and converging, and the first report does not expressly qualify the call as spam.

6. The method of any of the claims 2 to 5 in which the value of Y is multiplied by a predetermined second factor if the first report only is stored in the report database (201), the first report does not expressly qualify the call as spam, and the duration of the call is above a time threshold, and the value of X is multiplied by a predetermined third factor if the first report only is stored in the report database (201), and expressly qualifies the call as spam.

7. A method, in a network of interconnected equipment comprising a first terminal equipment (103) used by a caller (B), a second terminal equipment (102) used by a callee (A), a blockchain smartcontracts (207), a report database (201) and a blockchain distributed ledger (205), of handling a call made by the caller (B), comprising the steps of:
- subscribing by the callee (A) of a smartcontract with a reputation provider within the blockchain smartcontracts (207);
- querying by the second terminal equipment (102) the blockchain distributed ledger (205) according to the smartcontract subscribed by the callee (A), and collecting a current reputation score about the caller (B) calculated by blockchain smartcontracts (207) based on previous calls placed by caller (B); and
- upon callee (A) answering the call made by the caller (B) and after the end of the call:
- storing by the second terminal equipment (102) of a first report (511, 513) about the call in the report database (201);
- calculating by the second terminal equipment (102) of a hash value of the first report (521, 523); and
- storing by the second terminal equipment (102) of the hash value in the blockchain distributed ledger (205).

8. The method of claim 7 further comprising the steps of:
- upon callee (A) answering the call made by the caller (B) and after the end of the call:
- storing by the first terminal equipment (103) of a second report (512) about the call in the report database (201);
- calculating by the first terminal equipment (103) of a hash value of the second report (522); and
- storing by the first terminal equipment (103) of the hash value in the blockchain distributed ledger (205).

9. The method of claim 7 further comprising the steps of:
- subscribing by the caller (B) of a smartcontract with a reputation provider within the blockchain smartcontracts (207);
- querying by the first terminal equipment (103) the blockchain distributed ledger (205) according to the smartcontract subscribed by the caller (B), and collecting the current reputation score about the caller (B); and
- upon callee (A) answering the call made by the caller (B) and after the end of the call:
- storing by the first terminal equipment (103) of a third report (512) about the call in the report database (201);
- calculating by the first terminal equipment (103) of a hash value of the third report (522); and
- storing by the first terminal equipment (103) of the hash value in the blockchain distributed ledger (205).

10. The method of any of the claims 7 to 9, further comprising the steps performed by the blockchain smartcontracts (207) of:
- retrieving of the stored report (511, 512, 513) about the call in the report database (201), and of the stored hash value (521, 522, 523) of the stored report;
- checking by the blockchain smartcontracts (207) that the retrieved hash value (521, 522, 523) matches the retrieved report (511, 512, 513);
- calculating a new reputation score for caller (B) based the current reputation score and on the stored report; and
- updating a ledger in blockchain distributed ledger (205) with the new reputation score as the current reputation score about caller (B).

11. A computer-implemented system configured to perform the method of any one of claims
1 to 10.

12. A computer-readable medium comprising instructions causing to perform the method of any one of claims 1 to 10.
